# FASCICULE DE BREVET EUROPEEN

(11) **EP 1 869 500 B1**
(45) Date de publication et mention de la délivrance du brevet: **28.12.2016**
(21) Numéro de dépôt: 06743808.5
(22) Date de dépôt: 14.04.2006
(51) Int. Cl.: G01T 1/29

(54) **DISPOSITIF LIMITANT L'APPARITION D'ARTEFACTS DE DECODAGE POUR GAMMA CAMERA A MASQUE CODE**
VORRICHTUNG ZUM BEGRENZEN DES AUFTRETENS VON DEKODIERUNGSARTEFAKTEN FÜR EINE GAMMAKAMERA MIT KODIERTER MASKE
DEVICE FOR LIMITING DECODING ARTEFACT APPEARANCE FOR AN ENCODED MASK GAMMA CAMERA

(30) Priorité: 19.04.2005 FR 0550986
(43) Date de publication de la demande: 26.12.2007
(73) Titulaire: Commissariat à l'Énergie Atomique et aux Énergies Alternatives, 75015 Paris (FR)
(72) Inventeur: LAMADIE, Fabrice, F-30330 Connaux (FR); BRENNEIS, Christophe, F-30290 Saint Victor La Coste (FR); BARRAS, Stéphane, F-44340 Bouguenais (FR); GIRONES, Philippe, F-30200 Venejan (FR)
(74) Mandataire: Ahner, Philippe
(86) Numéro de dépôt international: PCT/FR2006/050350
(87) Numéro de publication internationale: WO 2006/111678

(56) Documents cités:
- WO-A-91/18357
- US-B1- 6 195 412
- IVANOV O P ET AL: "Portable X-ray and gamma-ray imager with coded mask: performance characteristics and methods of image reconstruction" NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL, vol. 422, no. 1-3, 11 février 1999 (1999-02-11), pages 729-734, XP004161928 ISSN: 0168-9002
- GMAR M ET AL: "Development of coded-aperture imaging with a compact gamma camera" IEEE TRANS NUCL SCI; IEEE TRANSACTIONS ON NUCLEAR SCIENCE AUGUST 2004, vol. 51, no. 4 I, août 2004 (2004-08), pages 1682-1687, XP002366988 cité dans la demande

## Description

### DOMAINE TECHNIQUE

La présente invention est relative à un dispositif limitant l'apparition d'artefacts de décodage inhérents à l'utilisation de gamma caméras à masque codé. Elle s'applique à la localisation de sources de rayonnement gamma.

### ÉTAT DE LA TECHNIQUE ANTÉRIEURE

Les gamma caméras sont des appareils qui permettent de détecter et de visualiser à distance des sources de rayonnement gamma. Elles réalisent des images des sources gamma qui sont superposées aux images visibles de la scène observée, ce qui permet de localiser dans l'espace et de caractériser les zones de concentration de radioactivité. Ces gamma caméras sont des outils ayant fait leurs preuves sur le terrain, elles sont particulièrement adaptées à la préparation d'interventions en milieu irradiant telles que des opérations de maintenance, de démantèlement ou d'inspections.

Ces gamma caméras peuvent avoir des applications aussi bien de laboratoire que dans l'industrie.

Un des principes de fonctionnement d'une gamma caméra est bien connu : un scintillateur reçoit, à travers une optique de collection, des photons gamma en provenance de la source de rayonnement gamma. Il convertit ces rayonnements en un signal lumineux à son tour transformé en signal électrique par une photocathode. Le signal électrique ainsi formé est amplifié par un intensificateur d'image et détecté par un dispositif à couplage de charge (CCD charge coupled device en anglais). L'ensemble scintillateur, photocathode, intensificateur d'image et dispositif à couplage de charge forme généralement le détecteur de la gamma caméra. Par la suite quand on parlera de détecteur il s'agira de cet ensemble et pas seulement du dispositif à couplage de charge. Le dispositif à couplage de charge comporte un certain nombre de pixels. Le détecteur coopère avec des moyens de traitement des signaux détectés. Après traitement des signaux délivrés par le détecteur, on peut localiser la source grâce au rayonnement qu'elle a émis et qui a traversé l'ensemble optique de collection, détecteur et grâce à l'image en lumière visible de la scène observée. De telles gamma caméras sont relativement sensibles et performantes.

La majorité des gamma caméras utilisent comme optique de collection des photons gamma un collimateur en forme de deux cônes opposés par le sommet ou sténopé.

Ce type de collimateur présente un bon compromis entre le champ d'observation et la résolution. Par contre, en raison de sa forme il est faiblement transparent aux rayonnements gamma ce qui conduit parfois à un manque de sensibilité. Plus précisément, il ne permet pas de concilier en même temps de faibles limites de détection avec des temps d'acquisition rapides.

Une des évolutions possibles pour corriger ces défauts et pour augmenter la dynamique de mesure des caméras, repose sur l'utilisation de masques codés à la place des collimateurs à double cône. Il s'agit de collimateurs comportant une pluralité d'éléments transparents et une pluralité d'éléments opaques qui permettent d'augmenter significativement la surface du scintillateur exposée directement au rayonnement gamma. Le signal reçu par le détecteur est modulé par le masque codé. Ces éléments transparents et opaques doivent suivre un arrangement précis. Ces collimateurs ne produisent pas une image directe de la scène observée mais une image « codée » de la scène observée qu'il faut, ensuite, traiter mathématiquement pour en reconstruire une image fidèle.

Une gamma caméra à masque codé est décrite dans l'article « Development of Coded-Aperture Imaging with a Compact Gamma Camera » M. Gmar, O. Gal, C. Le Goaller, O.P. Ivanov, V.N. Potapov, V.E. Stepanov, F. Lainé, F. Lamadie, IEEE Transactions on Nuclear Science, Août 2004, volume 51, pages 1682 à 1687.

Une gamma caméra à masque codé est décrite dans le document « Portable X-ray and gamma-ray imager with code mask: performance characteristics and methods of image reconstruction » O.P. Ivanov, A.N. Sudarkin, V.E. Stepanov, L.I. Urutskoev, Nuclear Instruments and Methods in Physics Research A, 1999, volume 422, pages 729 à 734.

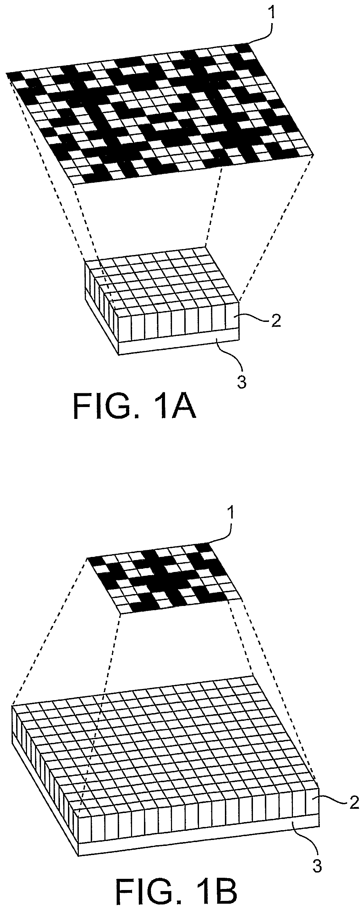

Les masques utilisés peuvent être de type URA (abréviation anglo-saxonne de Uniformly Redundant Array soit réseau redondant uniforme) qui tirent parti des propriétés des tableaux à résidus quadratiques dont les deux dimensions sont deux nombres premiers qui diffèrent de deux. Leurs dérivés tels les HURA (abréviation anglo-saxonne de Hexagonal URA pour URA hexagonal) ou les MURA (abréviation anglo-saxonne de Modified URA pour URA modifié) sont aussi intéressants. La théorie des masques codés URA a été définie par E. E. Fenimore et T. M. Cannon en 1972. Ces masques peuvent être utilisés, comme sur la figure 1A, dans une configuration à masque étendu avec un détecteur plus petit que le masque. Le masque est cyclique et comporte un motif élémentaire qui se répète plusieurs fois éventuellement partiellement. Dans la deuxième configuration possible présentée sur la figure 1B, le masque est plus petit que le détecteur. Cette configuration n'est pas avantageuse car elle impose l'utilisation de grands détecteurs encombrants, ce qui est incompatible avec l'imagerie gamma compacte. Sur ces figures, on a repéré avec la référence 1 le masque codé, avec la référence 2 le scintillateur et avec la référence 3 le détecteur.

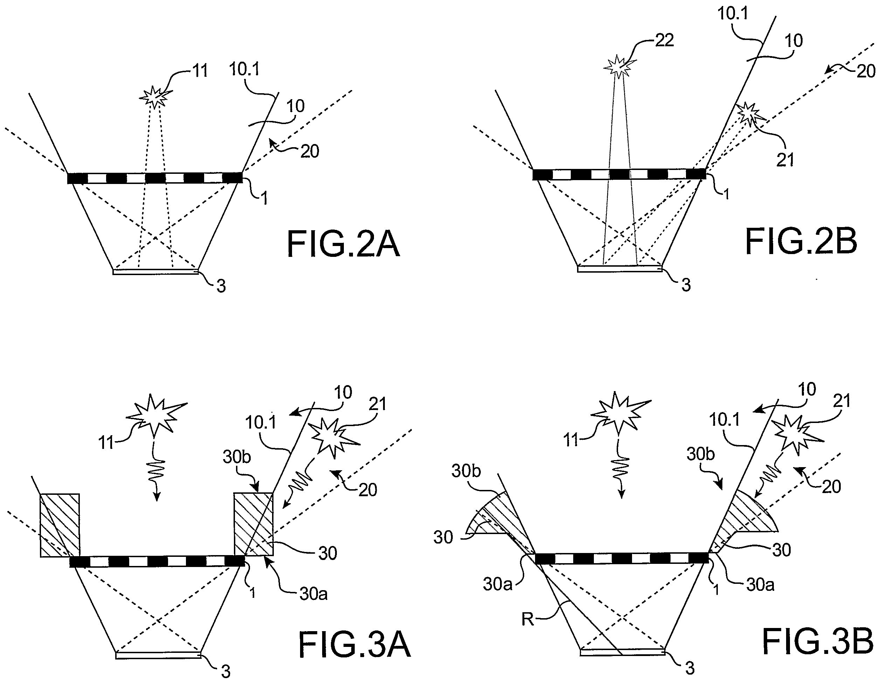

Cette technique de codage présente un défaut qui peut générer des problèmes de localisation dans certaines configurations pour les masques codés à motifs répétitifs. En effet, il existe deux zones distinctes au sein du champ de vision de la caméra ou du détecteur, une zone de codage total référencée 10 sur les figures 2A, 2B et une zone de codage partiel référencée 20 sur les figures 2A, 2B. Ces zones sont appelées par la suite zone totalement codée et zone partiellement codée.

Sur les figures 2A, 2B on aperçoit partiellement une gamma caméra dotée de ce masque codé 1. Le détecteur 3 est placé en vis-à-vis du masque codé 1.

La zone totalement codée 10 correspond à un volume délimité par des surfaces qui s'appuient sur des bords en vis-à-vis du détecteur 3 et du masque codé 1. Ces surfaces forment une enveloppe 10.1 de la zone totalement codée.

La zone partiellement codée 20 correspond à un volume compris entre le volume délimité par des surfaces qui s'appuient sur des bords opposés du détecteur 3 et du masque codé 1 et entre l'enveloppe 10.1 de la zone totalement codée 10.

Pour une source de rayonnement gamma 11 se trouvant dans la zone totalement codée 10 du champ de vision du détecteur 3, chaque pixel du détecteur 3 reçoit un signal ayant traversé le masque codé 1. Ce signal ne peut être décodé que d'une seule et unique façon ; il conduit à une reconstitution fidèle de la scène. Cette configuration est illustrée sur la figure 2A.

À contrario comme illustré sur la figure 2B, pour une source de rayonnement gamma 21 se trouvant dans la zone partiellement codée 20 du champ de vision du détecteur 3, la modulation par le masque codé 1 est incomplète. Pour un même signal plusieurs reconstitutions sont possibles et des artefacts de décodage 22 apparaissent lors du décodage. Ces artéfacts 22 sont, a priori, indifférentiables de sources réelles. Ils rendent difficile d'utilisation la technique des masques codés puisqu'ils font apparaître de fausses sources de rayonnement gamma.

A ce jour, il n'existe pas de solution appropriée même mathématique pour réduire correctement ces artefacts de décodage.

### EXPOSÉ DE L'INVENTION

La présente invention a justement comme but de proposer un dispositif limitant l'apparition d'artefacts de décodage pour gamma caméra à masque codé qui soit simple à réaliser et ne nécessite pas d' avoir recours à des traitements mathématiques complexes pour éliminer les artefacts de décodage. Ce dispositif permet de limiter l'influence néfaste de sources de rayonnement qui sont situées dans la zone partiellement codée de la gamma caméra et qui sont à l'origine de ces artefacts de décodage.

Plus précisément la présente invention est un dispositif limitant l'apparition d'artefacts de décodage pour gamma caméra à masque codé comportant un détecteur de rayonnement gamma en vis-à-vis du masque codé et possédant un champ de vision ayant une zone partiellement codée par le masque codé. Selon l'invention, le dispositif comporte une pièce évidée, opaque au rayonnement gamma, à disposer à l'opposé du détecteur par rapport au masque codé, qui occulte la zone partiellement codée du champ de vision pour le détecteur.

La pièce évidée borde le masque codé.

La pièce évidée peut avoir une paroi intérieure sensiblement cylindrique, tronconique, pyramidale ou même polyédrique.

La pièce évidée peut être réalisée en métal de densité supérieure à 7 g/cm³.

Plus précisément, la pièce évidée peut être réalisée en acier inoxydable, en plomb ou en alliage à base de plomb, en cuivre ou en alliage à base de cuivre, en tungstène ou en alliage à base de tungstène tel celui connu sous la dénomination DENAL qui est une marque de la société CIME BOCUZE.

La pièce évidée peut avoir une épaisseur sensiblement constante sur toute sa longueur.

En variante, la pièce évidée peut avoir une épaisseur qui varie le long de sa longueur, de manière qu'un photon gamma soit arrêté par une même épaisseur de matière quel que soit son trajet entre la zone partiellement codée du champ de vision et le détecteur.

La pièce évidée peut être munie d'un pas de vis pour être vissée sur une pièce support du masque codé.

La gamma caméra comporte un champ de vision ayant une zone totalement codée par le masque codée, limitée par une enveloppe et adjacente à la zone partiellement codée, la pièce évidée peut comporter une extrémité libre à l'opposé du détecteur lorsqu'elle est montée sur la caméra telle que l'enveloppe de la zone totalement codée passe par l'extrémité libre.

La pièce évidée peut avoir une paroi intérieure qui épouse l'enveloppe de la zone totalement codée.

La pièce évidée peut avoir une extrémité à l'opposé du masque codé qui est sensiblement arrondie.

L'arrondi peut correspondre à un rayon centré dans une partie centrale du détecteur.

La présente invention concerne également une gamma caméra qui comporte un tel dispositif limitant l'apparition d'artefacts de décodage.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
les figures 1A, 1B montrent schématiquement deux exemples de gamma caméra à masque codé ;
les figures 2A, 2B montrent schématiquement une gamma caméra et mettent en évidence la zone totalement codée et la zone partiellement codée par le masque codé et l'apparition d'artefacts de décodage selon la position de la source gamma à observer ;
Les figures 3A, 3B illustrent deux modes de réalisation d'un dispositif limitant l'apparition d'artefacts de décodage pour gamma caméra à masque codé selon l'invention ;
les figures 4A, 4B montrent en éclaté et en coupe une gamma caméra équipée d'un dispositif selon l' invention ;
les figures 5A, 5B montrent en éclaté et en coupe une gamma caméra équipée d'un autre exemple de dispositif selon l'invention ;
les figures 6A à 6C montrent de face trois exemples de masques codés utilisés dans la gamma caméra des figures 4A, 4B, 5A, 5B ;
les figures 7A, 7B montrent respectivement une image d'une source de rayonnement parasitée par une source trois fois plus intense, prise avec une gamma caméra selon l'invention et selon l'art antérieur.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

On va maintenant s'intéresser aux figures 3A, 3B qui montrent de manière schématique et partielle des dispositifs limitant l'apparition d'artefacts de décodage pour gamma caméra à masque codé.

La gamma caméra est schématisée par un détecteur 3 disposé en vis-à-vis du masque codé 1. On a également représenté la zone totalement codée 10 (en traits pleins) et la zone partiellement codée 20 (en traits pointillés). Une première source de rayonnement 11 a été représentée dans la zone totalement codée 10. De par sa position par rapport à l'ensemble formé par le détecteur 3 et le masque codé 1, la source 11 peut être détectée avec précision. Une seconde source de rayonnement 21 est placée dans la zone partiellement codée 20.

La gamma caméra est équipée d'un dispositif limitant l'apparition d'artefacts de décodage 30 qui va occulter la seconde source 21 pour le détecteur 3 sans avoir d'effet sur le rayonnement provenant de la première source 11. Plus précisément, ce dispositif limitant l'apparition d'artefacts de décodage 30 occulte toute la zone partiellement codée 20 pour le détecteur 3. Il coopère avec le masque codé 1 et est disposé à l'opposé du détecteur 3 par rapport au masque codé 1. Ce dispositif limitant l'apparition d'artefacts de décodage 30 est opaque au rayonnement émis par les sources gamma.

Il peut prendre la forme d'une pièce évidée 30 qui borde le masque codé 1. Sur la figure 3A cette pièce évidée est tubulaire et plus précisément est un tube cylindrique de révolution mais d'autres formes seraient possibles pour optimiser son effet technique. Sa paroi intérieure pourrait notamment être tronconique comme illustré sur la figure 3B ou même pyramidale ou polyédrique. Ces formes ne sont pas explicitement représentées pour ne pas multiplier le nombre de figures mais la figure 3A pourrait très bien illustrer une forme polyédrique et la figures 3B une forme pyramidale.

Cette pièce évidée 30a une extrémité 30.a qui est solidaire de masque codé 3 et une extrémité libre 30b. Dans l'exemple de la figure 3A l'enveloppe de la zone totalement codée 10 passe par l'extrémité libre 30.b de la pièce évidée 30. Cette contrainte contribue à déterminer la longueur et la largeur extérieure de la pièce évidée 30. L'épaisseur de matière de la pièce évidée est sensiblement constante sur toute sa longueur.

Dans l'exemple de la figure 3B, la paroi intérieure de la pièce évidée 30 épouse l'enveloppe 10 de la zone totalement codée. L'épaisseur de matière de la pièce évidée n'est pas constante sur toute sa longueur. Cette épaisseur est telle qu'un photon gamma est arrêté par une même épaisseur de matière quel que soit son trajet entre la zone partiellement codée 20 du champ de vision et le détecteur 3.

Dans la configuration de la figure 3B, la pièce évidée 30 a une extrémité libre 30b à l'opposé du masque codé 1 qui est sensiblement arrondie. L'arrondi est fourni par un rayon R centré dans une partie centrale du détecteur 3.

Cette pièce évidée 30 est réalisée dans un matériau métallique ayant une densité relativement élevée d'au moins 7 g/cm³. Il peut s'agir d'acier inoxydable, sa densité valant environ 7,86 g/cm³, ou de plomb ou d'alliage à base de plomb ou de cuivre ou d'alliage à base de cuivre. Avantageusement, il peut s' agir de tungstène (densité 18,3 g/cm³) ou d'un alliage à base de tungstène tel que celui connu sous la dénomination DENAL. La densité de cet alliage à base de tungstène et de cuivre vaut environ 18,5 g/cm³ ce qui lui confère un très bon pouvoir d'atténuation des photons gamma. On utilisera de préférence le DENAL en présence de photons gamma de forte énergie, supérieure par exemple à 100keV et le cuivre ou les autres matériaux cités pour des énergies inférieures. Une autre propriété intéressante du DENAL est sa bonne usinabilité avec des outils classiques ce qui le fait préférer au plomb qui lui a une trop grande ductilité.

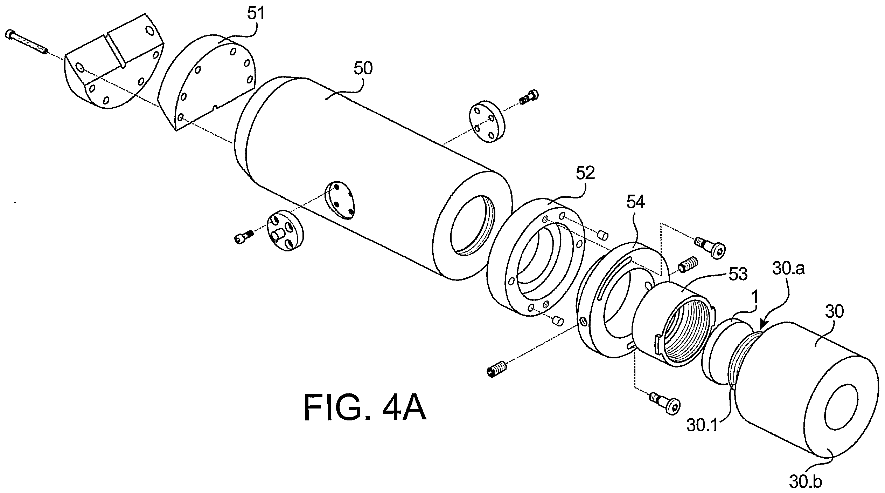

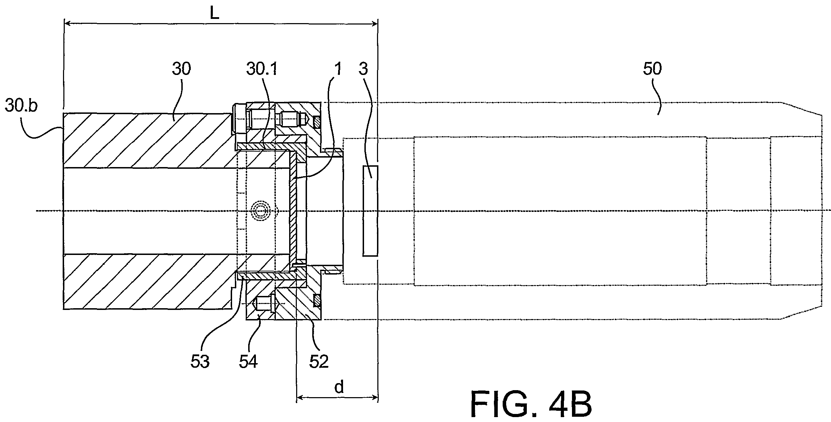

Les figures 4A, 4B montrent en éclaté et en coupe partielle un exemple de gamma caméra selon l'invention dans la configuration de la figure 3A.

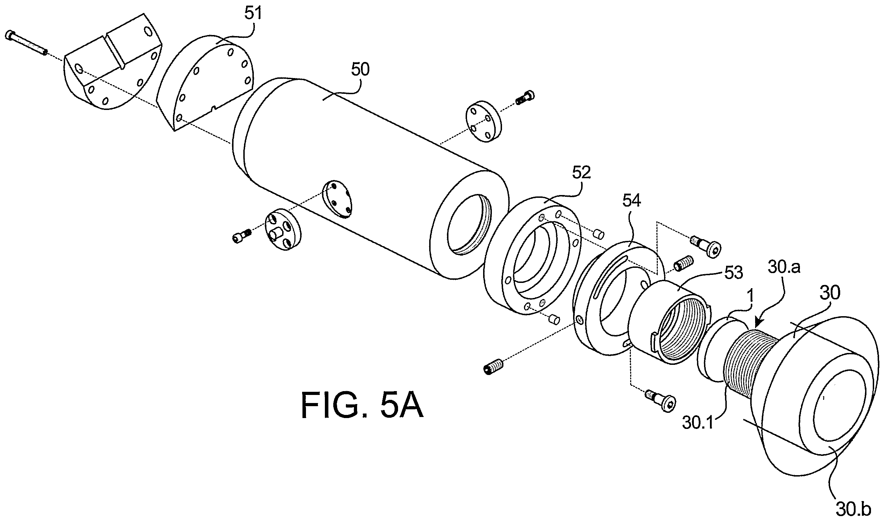

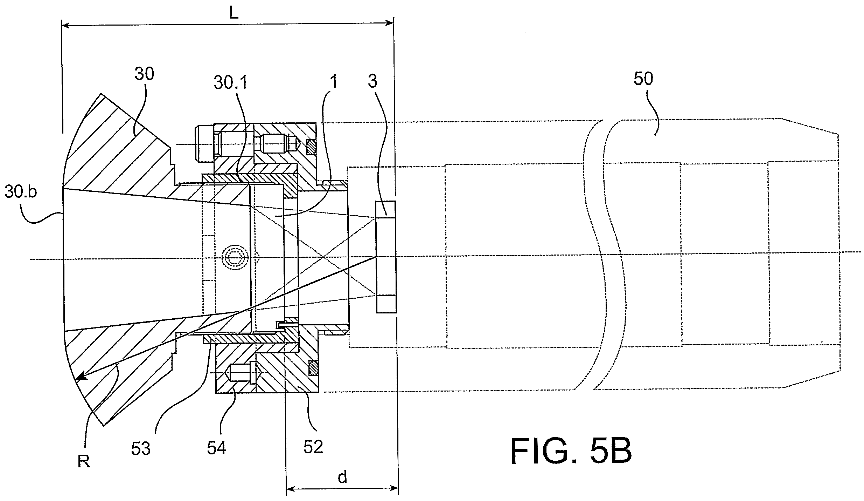

Les figures 5A, 5B montrent en éclaté et en coupe partielle un exemple de gamma caméra selon l'invention dans la configuration de la figure 3B.

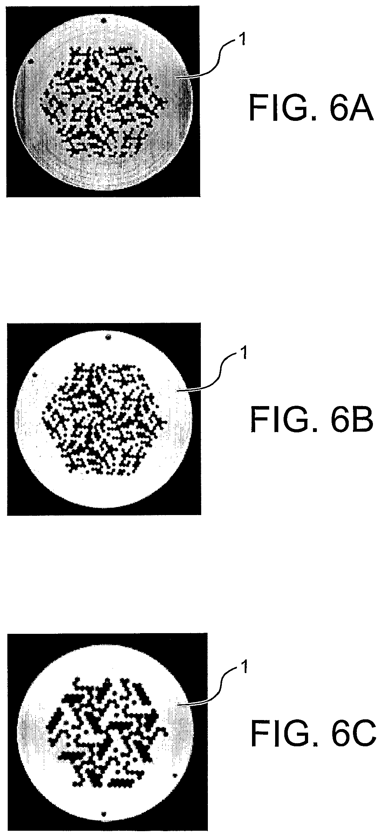

La référence 50 représente un corps de la gamma caméra. C'est dans ce corps 50 globalement en forme de cylindre de révolution qu'est logé le détecteur 3 qui n'est visible que sur les figures 4B, 5B. Sur les figures 4A, 5A, une des extrémités du corps 50 est fermée par un fond 51 muni de passage pour des fils d'alimentation en énergie (non représentés). Le masque codé 1 est solidaire de l'autre extrémité du corps 50 par l'intermédiaire de plusieurs bagues 52, 53, 54 qui s'emboîtent les unes dans les autres. On distingue deux bagues externes 52, 54 emboîtées partiellement l'une dans l'autre et une bague interne référencée 53. En fait, le masque codé 1 associé au dispositif limitant l'apparition d'artefacts de décodage 30 forme un organe amovible qui peut être changé à la demande. Des tests menés pour évaluer le dispositif limitant l'apparition d'artefacts de décodage 30 ont prévu trois masques codés 1 ayant des motifs et des épaisseurs différentes. Ils sont représentés aux figures 6A à 6C.

L'une des bagues externes 52 permet de fixer le masque codé 1 au corps 50 de la caméra. Le masque codé 1 est enchâssé dans la bague interne 53 qui vient se loger dans les deux bagues externes lorsqu'elles sont montées l'une dans l'autre. Un ou plusieurs doigts peuvent être prévus pour solidariser le masque codé 1 à la bague interne 54. Le dispositif limitant l'apparition d'artefacts de décodage vient se fixer à l'intérieur de la bague interne 53. L'autre bague externe 54 est apte à se déplacer en rotation par rapport à la première bague externe 52 et de la sorte à entraîner en rotation la bague interne 53, le masque codé 1 et le dispositif limitant l'apparition d'artefacts de décodage 30. De la sorte, le masque codé 1 peut prendre plusieurs positions prescrites, par exemple deux décalées de 60°, ce qui permet de faire avec le même masque codé deux images codées antisymétriques de la même scène qui lors du traitement permettront d'améliorer le rapport signal sur bruit.

Le dispositif limitant l'apparition d'artefacts de décodage 30 est réalisé par une pièce évidée en cylindre de révolution ou en tronc de cône ayant une extrémité filetée 30.1 qui vient se visser à l'intérieur de la bague interne 53 et une extrémité libre du côté de la scène à observer.

Des prototypes d'une telle pièce évidée ont été testés. Il s'agit de cylindres de révolution de longueur 70 mm ou 125 mm, de rayon intérieur 48,1 mm et de plus grand rayon extérieur 108,1 mm. Ils sont en acier inoxydable. C'est le dispositif limitant l'apparition d'artefacts de décodage 30 court (70 mm) qui est illustré sur les figures 4A, 4B.

Le détecteur 3 a un diamètre de 50 mm. La distance d séparant la face arrière du masque codé et la face arrière du détecteur 3 vaut 45,4 mm. Les faces arrière du masque codé 1 et du détecteur 1 sont situées du côté du fond du corps de la caméra, leur face avant étant du côté de la scène à observer.

Plusieurs masques codés 1 ont été testés. Ce sont des masques codés de type HURA qui sont représentés sur les figures 6A à 6C. Le masque de la figure 6A est de rang 9 et son épaisseur de 4 mm tandis que ce lui de la figure 6B également de rang 9 a une épaisseur de 6mm. Le masque de la figure 6C est celui de rang 6. On rappelle que le rang d'un masque codé est un nombre qui définit de manière unique le motif élémentaire du masque et la dimension des éléments (trous et pleins) qui peuvent être des hexagones. Par exemple un masque de rang R aura K éléments dans son motif élémentaire central avec K = 3R(R + 1) + 1. Le motif total des masques est un hexagone de 45 mm sur plat. Les caractéristiques de ces masques codés sont regroupées dans le tableau suivant :

| **MASQUES** | **RANG 6** | **RANG 9** |
|---|---|---|
| Épaisseur | 12 mm | 4 et 6 mm |
| Distance entre trous | 1,85 mm | 1,26 mm |
| Nombre de trous dans le motif central | 64 | 136 |
| Surface éclairée | 1,9 cm | 1,9 cm |

La distance L séparant la face arrière du détecteur 3 de l'extrémité libre des moyens atténuateurs d'artefacts de décodage vaut 174,4 mm pour le masque codé d'épaisseur 4 mm, 176,4 mm pour le masque codé d'épaisseur 6 mm, 182,4 mm pour le masque codé d'épaisseur 12 mm.

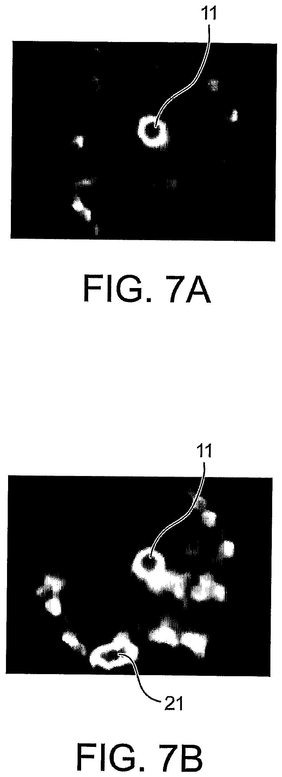

Il est possible d'observer avec ces prototypes de dispositifs limitant l'apparition d'artefacts de décodage, des sources placées dans la zone de codage total, en présence de sources parasites situées dans la zone de codage partiel, plus intenses que les premières. On peut de référer aux figures 7A, 7B qui montent une vue d'une scène représentant une source de cobalt 60 parasitée par une source de césium 137. Dans cette configuration, le débit de dose généré par la source de césium 137 au niveau de la gamma caméra est trois fois plus intense que celui généré par la source de cobalt 60. La vue de la figure 7A a été prise avec une gamma caméra équipée d'un dispositif limitant l'apparition d'artefacts de décodage objet de l'invention et la vue de la figure 7B a été prise avec une gamma caméra à masque codé sans le dispositif objet de l'invention. Sur la figure 7A, la source parasite n'est pas visible alors que sur la figure 7B elle est visible et elle donne une fausse représentation de la scène observée.

## Revendications

1. Dispositif limitant l'apparition d'artefacts de décodage pour gamma caméra à masque codé (1) comportant un détecteur de rayonnement gamma (3) en vis-à-vis du masque codé et possédant un champ de vision ayant une zone partiellement codée (20) par le masque codé, **caractérisé en ce qu'**il comporte une pièce évidée (30), opaque au rayonnement gamma, disposée à l'opposé du détecteur (3) par rapport au masque codé (1), cette pièce évidée (30) occultant la zone partiellement codée (20) du champ de vision pour le détecteur (3) et ayant une épaisseur qui varie le long de sa longueur, de manière qu'un photon gamma soit arrêté par une même épaisseur de matière quel que soit son trajet entre la zone partiellement codée (20) du champ de vision et le détecteur (3).

2. Dispositif selon la revendication 1, **caractérisé en ce que** la pièce évidée (30) a une paroi intérieure sensiblement cylindrique, tronconique, pyramidale, polyédrique.

3. Dispositif selon la revendication 2, **caractérisé en ce que** la pièce évidée (30) borde le masque codé (3).

4. Dispositif selon l'une des revendications 1 à 3, **caractérisé en ce que** la pièce évidée (30) est réalisée en métal de densité supérieure à environ 7 g/cm³.

5. Dispositif selon la revendication 4, **caractérisé en ce que** la pièce évidée (30) est réalisée en acier inoxydable, en plomb ou en alliage à base de plomb, en tungstène ou en alliage à base de tungstène tel le DENAL, en cuivre ou en alliage à base de cuivre.

6. Dispositif selon l'une des revendications 1 à 5, **caractérisé en ce que** la pièce évidée (30) a une extrémité (30a) filetée pour être fixée par vissage à une pièce de support (53) du masque codé (1).

7. Dispositif selon l'une des revendications 1 à 6, pour gamma caméra à masque codé avec un champ de vision ayant une zone totalement codée (10) par le masque codé (1) limitée par une enveloppe (10.1) et adjacente à la zone partiellement codée (20), **caractérisé en ce que** la pièce évidée (30) comporte une extrémité libre (30b) à l'opposé du détecteur (3) lorsqu'elle est montée sur la caméra telle que l'enveloppe (10.1) de la zone totalement codée (10) passe par l'extrémité libre (30b).

8. Dispositif selon l'une des revendications 1 à 7, pour gamma caméra à masque codé avec un champ de vision ayant une zone totalement codée (10) par le masque codé (1) limitée par une enveloppe (10.1) et adjacente à la zone partiellement codée (20), **caractérisé en ce que** la pièce évidée (30) possède une paroi intérieure qui épouse l'enveloppe (10.1) de la zone totalement codée (10).

9. Dispositif selon l'une des revendications 1 à 8, **caractérisé en ce que** la pièce évidée (30) comporte une extrémité libre (30b) à l'opposé du détecteur (3) lorsqu'elle est montée sur la caméra, cette extrémité libre (30b) étant sensiblement arrondie.

10. Dispositif selon la revendication 9, **caractérisé en ce que** l'arrondi correspond à un rayon (R) centré dans une partie centrale du détecteur (3).

11. Gamma caméra **caractérisée en ce qu'**elle comporte un dispositif (30) limitant l'apparition d'artefacts de décodage selon l'une des revendications 1 à 10 .

## Patentansprüche

1. Vorrichtung zum Begrenzen des Auftretens von Dekodierungsartefakten für eine Gammakamera mit kodierter Maske (1), die einen Gammastrahlendetektor (3) gegenüber der kodierten Maske enthält und ein Sichtfeld mit einem durch die kodierte Maske teilweise kodierten Bereich (20) besitzt, **dadurch gekennzeichnet, dass** sie ein ausgenommenes Teil (30) aufweist, das gegenüber der Gammastrahlung undurchlässig ist und in Bezug auf die kodierte Maske (1) dem Detektor (3) entgegengesetzt angeordnet ist, wobei dieses ausgenommene Teil (30) den teilweise kodierten Bereich (20) des Sichtfelds für den Detektor (3) verdeckt und eine Materialdicke hat, die seiner Länge nach variiert, so dass ein Gammaphoton von einer gleichen Materialdicke gestoppt wird, unabhängig davon, wie seine Wegstrecke zwischen dem teilweise kodierten Bereich (20) des Sichtfelds und dem Detektor (3) ist.

2. Vorrichtung nach Anspruch 1, **dadurch gekennzeichnet, dass** das ausgenommene Teil (30) eine im Wesentlichen zylindrische, kegelstumpfförmige, pyramidenförmige, polyedrische Innenwand hat.

3. Vorrichtung nach Anspruch 2, **dadurch gekennzeichnet, dass** das ausgenommene Teil (30) die kodierte Maske (3) umrandet.

4. Vorrichtung nach einem der Ansprüche 1 bis 3, **dadurch gekennzeichnet, dass** das ausgenommene Teil (30) aus einem Metall mit einer Dichte höher als etwa 7 g/cm³ hergestellt ist.

5. Vorrichtung nach Anspruch 4, **dadurch gekennzeichnet, dass** das ausgenommene Teil (30) aus Edelstahl, Blei oder einer Legierung auf Bleibasis, aus Wolfram oder einer Legierung auf Wolframbasis, aus DENAL, aus Kupfer oder einer Legierung auf Kupferbasis hergestellt ist.

6. Vorrichtung nach einem der Ansprüche 1 bis 5, **dadurch gekennzeichnet, dass** das ausgenommene Teil (30) ein Ende (30a) mit einem Gewinde hat, um es durch Verschrauben an ein Tragteil (53) der kodierten Maske (1) zu befestigen.

7. Vorrichtung nach einem der Ansprüche 1 bis 6 für eine Gammakamera mit kodierter Maske mit einem Sichtfeld, das einen von der kodierten Maske (1) vollständig kodierten Bereich (10) aufweist, der von einer Hülle (10.1) eingegrenzt wird und an den teilweise kodierten Bereich (20) angrenzt, **dadurch gekennzeichnet, dass** das ausgenommene Teil (30) ein freies Ende (30b) entgegengesetzt zum Detektor (3) aufweist, wenn es an der Kamera so angebracht ist, dass die Hülle (10.1) des vollständig kodierten Bereichs (10) durch das freie Ende (30b) verläuft.

8. Vorrichtung nach einem der Ansprüche 1 bis 7 für eine Gammakamera mit kodierter Maske mit einem Sichtfeld, das einen von der kodierten Maske (1) vollständig kodierten Bereich (10) aufweist, der von einer Hülle (10.1) eingegrenzt wird und an den teilweise kodierten Bereich (20) angrenzt, **dadurch gekennzeichnet, dass** das ausgenommene Teil (30) eine Innenwand aufweist, die sich an die Hülle (10.1) des vollständig kodierten Bereichs (10) anschmiegt.

9. Vorrichtung nach einem der Ansprüche 1 bis 8, **dadurch gekennzeichnet, dass** das ausgenommene Teil (30) ein freies Ende (30b) entgegengesetzt zum Detektor (3) aufweist, wenn es an der Kamera angebracht ist, wobei dieses freie Ende (30b) im Wesentlichen abgerundet ist.

10. Vorrichtung nach Anspruch 9, **dadurch gekennzeichnet, dass** die Abrundung einem Radius (R) entspricht, der in einem Mittelabschnitt des Detektors (3) zentriert ist.

11. Gammakamera, **dadurch gekennzeichnet, dass** sie eine das Auftreten von Dekodierungsartefakten begrenzende Vorrichtung (30) nach einem der Ansprüche 1 bis 10 aufweist.

## Claims

1. Device limiting the appearance of decoding artefacts for a gamma camera with a coded mask (1) comprising a gamma radiation detector (3) opposite the coded mask and having a field of view with an area partially coded (20) by the coded mask, **characterised in that** it comprises a recessed part (30), which is opaque to the gamma radiation, and which is arranged opposite the detector (3) with respect to the coded mask (1), with said recessed part (30) obscuring the partially coded area (20) of the field of view for the detector (3) and having a thickness that varies over its length, so that a gamma photon is stopped by the same thickness of material, regardless of fits path between the partially coded area (20) of the field of view and the detector (3).

2. Device according to claim 1, **characterised in that** the recessed part (30) has a substantially cylindrical, frusto-conical, pyramid-shaped, or even polyhedral internal wall.

3. Device according to claim 2, **characterised in that** the recessed part (30) borders the coded mask (3).

4. Device according to any of claims 1 to 3, **characterised in that** the recessed part (30) is made of metal with a density greater than 7 g/cm³.

5. Device according to claim 4, **characterised in that** the recessed part (30) is made of stainless steel, lead or a lead-based alloy, tungsten or a tungsten-based alloy such as DENAL, copper or a copper-based alloy.

6. Device according to any one of claims 1 to 5, **characterised in that** the recessed part (30) has a threaded end (30a) so as to be attached by screwing to a support part (53) of the coded mask (1).

7. Device according to any one of claims 1 to 6, for a gamma camera with a coded mask with a field of view having an area totally coded (10) by the coded mask (1), limited by a casing (10.1) and adjacent to the partially coded area (20), **characterised in that** the recessed part (30) comprises a free end (30b) opposite the detector (3) when it is mounted on the camera so that the casing (10.1) of the totally coded area (10) passes through the free end (30b).

8. Device according to any one of claims 1 to 6, for a gamma camera with a coded mask with a field of view having an area totally coded (10) by the coded mask (1), limited by a casing (10.1) and adjacent to the partially coded area (20), **characterised in that** the recessed part (30) has an interior wall that its closely with the casing (10.1) of the totally coded area (10).

9. Device according to any one of claims 1 to 8, **characterised in that** the recessed part (30) has a free end (30b) opposite the detector (3) when it is mounted on the camera, which free end (30b) is substantially rounded.

10. Device according to claim 9, **characterised in that** the rounded end corresponds to a radius (R) centred in a central portion of the detector (30).

11. Gamma camera **characterised in that** it comprises a device (30) limiting the appearance of decoding artefacts according to any one of claims 1 to 10.
